# EUROPÄISCHE PATENTSCHRIFT

(11) **EP 1 510 444 B1**
(45) Veröffentlichungstag und Bekanntmachung des Hinweises auf die Patenterteilung: **11.01.2006**
(21) Anmeldenummer: 03103221.2
(22) Anmeldetag: 25.08.2003
(51) Int. Cl.: B62D 21/15

(54) **Fahrwerk- Hilfsrahmenanordnung zur Verbesserung der Crashsicherheit**
Motor vehicle subframe arrangement with improved crash safety
Châssis auxiliaire d'un véhicule automobile avec sécurité élevée en cas d'accident

(43) Veröffentlichungstag der Anmeldung: 02.03.2005
(73) Patentinhaber: Ford Global Technologies, LLC, A subsidary of Ford Motor Company, Dearborn, MI 48126 (US)
(72) Erfinder: Reim, Joerg, 50823 Koeln (DE); Van Oirschot, Dirk, Schwalmtal (DE)
(74) Vertreter: Drömer, Hans-Carsten

(56) Entgegenhaltungen:
- DE-A- 4 134 267
- US-A- 5 884 963
- US-A- 6 109 654
- US-B1- 6 367 869
- PATENT ABSTRACTS OF JAPAN vol. 2002, no. 03, 3. April 2002 (2002-04-03) -& JP 2001 310755 A (FUJI HEAVY IND LTD), 6. November 2001 (2001-11-06)

## Beschreibung

Die Erfindung betrifft eine Fahrwerk-Hilfsrahmenanordnung an einer vorzugsweise selbsttragenden Fahrzeugkarosserie zur Verbesserung der Crashsicherheit.

Moderne Fahrzeugkarosserien sind im Bereich der Vorderradaufhängung mit einem sehr steifen Fahrwerk- Hilfsrahmen ausgestattet, wodurch die Aufnahme von Querkräften und somit die Spurstabilität des Fahrzeugs verbessert wird. Darüber hinaus kann in dieser Bauweise bei der Fahrzeugmontage der komplette Antriebsstrang inklusive der Vorderradaufhängung produktionstechnisch vorteilhaft als komplettes Montagemodul in die Fahrzeugkarosserie eingebaut werden.

Aus dieser Bauweise ergeben sich allerdings Probleme der Crashsicherheit der Fahrzeuginsassen. So sind zu deren Schutz insbesondere bei einem Frontalaufprall des Fahrzeugs aus dem Stand der Technik eine Vielzahl von Maßnahmen bekannt, bei denen durch plastische Verformung von Karosserieteilen eine Umwandlung der kinetischen Energie des Fahrzeugs in Deformationsenergie erfolgt und so zu hohe Beschleunigungen der Insassen verhindert werden sollen. Bei Einbau eines Fahrwerk-Hilfsrahmens verhindert allerdings dessen Steifigkeit, die zur Verbesserung der Spurstabilität eigentlich erwünscht ist, dass die Deformationszonen der Karosserie im Bereich des Hilfsrahmens, beispielsweise die Längsträger, sich ausreichend verformen können. Außerdem besteht die Gefahr, dass bei einem sehr starken Aufprall der Hilfsrahmen bzw. Teile von ihm in die Fahrgastzelle hineingedrückt werden und sich so ein zusätzliches Verletzungsrisiko ergibt.

Aus der US 5,884,963 ist ein Karosseriestrukturelement bekannt, das bei einem Frontalaufprall des Fahrzeugs einerseits kinetische Energie durch dessen gezielte Verformung umwandelt und andererseits einen Fahrwerk- Hilfsrahmen bei weitergehender Deformation unter die Fahrgastzelle leitet. Ein Eindringen des Hilfsrahmens in die Fahrgastzelle ist zwar somit verhindert, der Nachteil dieser Erfindung ist aber, dass sich die Deformationszonen der Karosserie im Bereich des Hilfsrahmens durch dessen Steifigkeit nicht ausreichend und gleichmäßig verformen können.

So verbleibt auch in dem aus der US 6,367,869 bekannten Energieumwandlungsmethode der Fahrwerk-Hilfsrahmen nach einem Frontalaufprall im Bereich der Karosseriedeformationszonen und verhindert so deren ausreichende und gleichmäßige Verformung. Es löst sich hier lediglich der hintere Teil des Hilfsrahmens mittels eines deformierbaren Befestigungshilfsbleches von der Karosserie, um so ein Eindringen des Hilfsrahmens in die Fahrgastzelle zu verhindern.

Aus der US 6,109,654 ist eine stoßabsorbierende Fahrzeugstruktur bekannt, bei der durch definiert nacheinander sich lösende hintere Befestigungen eines Fahrwerk-Hilfsrahmens die Deformationen der linken und rechten Karosserie- und Hilfsrahmenteile bzw. die daraus resultierenden Beschleunigungsspitzen hintereinander erfolgen, so dass die Gesamtbeschleunigungsspitzen auf die Fahrzeuginsassen geringer ausfallen. Das ändert aber nichts daran, dass auch hier die steiferen Hilfsrahmenteile im Bereich der Karosseriedeformationszonen verbleiben und so deren ausreichende und gleichmäßige Verformung verhindern.

Aufgabe der Erfindung ist daher, eine Fahrwerk- Hilfsrahmenanordnung für Fahrzeuge bereitzustellen, die es ermöglicht, dass sich bei einem Frontalaufprall des Fahrzeugs die Deformationszonen der Fahrzeugkarosserie, ungestört durch den Fahrwerk- Hilfsrahmen, ausreichend und gleichmäßig verformen können, um so eine größere effektive Crashlänge der Karosseriedeformationszonen zu erreichen.

Aufgabe der Erfindung ist weiterhin, die Fahrwerk- Hilfsrahmenanordnung dergestalt auszuführen, dass hierbei bei einer weitergehenden Verformung des Fahrzeugs der Fahrwerk- Hilfsrahmen nicht in die Fahrgastzelle hineingedrückt werden kann.

Erfindungsgemäß wird diese Aufgabe durch die Fahrwerk- Hilfsrahmenanordnung gemäß der Merkmale des Patentanspruchs 1 gelöst. Vorteilhafte Ausführungen der Erfindung sind in den kennzeichnenden Merkmalen der Unteransprüche beschrieben.

Hierzu sind die Befestigungseinrichtungen des Fahrwerk- Hilfsrahmens an der Fahrzeugkarosserie dergestalt ausgeführt, dass sie sich bei einem Frontalaufprall des Fahrzeugs oberhalb eines bestimmten Verformungsgrades der Karosseriedeformationszonen vollständig lösen, der Fahrwerk- Hilfsrahmen somit von der Karosserie völlig entkoppelt ist und mittels einer Rampe unter die Fahrgastzelle geschoben wird.

In einer vorteilhaften Ausgestaltung der Erfindung ist der Fahrwerk- Hilfsrahmen an vier Punkten mit der Karosserie verbunden, und zwar an den beiden vorderen Punkten mittels eines Trägerrohres und einer Abscherschraubverbindung mit dem Längsträger, und an den beiden hinteren Punkten mittels eines beispielsweise durch Bohrungen gezielt geschwächten Befestigungsblechs, das oberhalb einer bestimmten Längskraft nach hinten wegknickt, und mittels Schraubverbindungen mit der Karosserie-Unterbodenstruktur.

Bei einem Frontalaufprall des Fahrzeugs können nun erfindungsgemäß folgende Deformationsphasen unterschieden werden:
1. Verformung nur der Karosseriedeformationszonen wie der Längsträger,
2. beginnende Verformung des hinteren Befestigungsblechs, weiter Verformung der Längsträger,
3. Abscherung der vorderen Befestigungspunkte des Fahrwerk- Hilfsrahmens am Längsträger, weiter Verformung der Längsträger und des hinteren Befestigungsblechs,
4. komplette Ablösung des Fahrwerk- Hilfsrahmens am hinteren Befestigungsblech nach dessen vollständigem Wegknicken, weiter Verformung der Längsträger, und
5. Wegschieben des kompletten Fahrwerk- Hilfsrahmens unter die Fahrgastzelle mittels einer Blechrampe.

Dieses im Sinne der Erfindung sehr vorteilhafte Verhalten der Fahrwerk-Hilfsrahmenanordnung führt dazu, dass im Gegensatz zum bisherigen Stand der Technik ein sehr viel größerer Bereich der Karosserie effektiv als Deformationszone wirken kann, so dass einerseits die Beschleunigungen auf die Fahrzeuginsassen bei einem Frontalaufprall verringert werden können, oder andererseits auch bei stark reduzierter Baulänge des Crashbereichs die Beschleunigungen auf die Fahrzeuginsassen auf dem heutigen Niveau gehalten werden können.

Somit werden die der Erfindung zugrunde liegenden Aufgaben durch die bereitgestellte Fahrwerk- Hilfsrahmenanordnung vollkommen gelöst.

Nachfolgend wird ein bevorzugtes Ausführungsbeispiel der Erfindung weiter unter Bezugnahme auf die beigefügten Zeichnungen erläutert. Es zeigen:
**Fig.** 1 eine perspektivische Ansicht auf eine erfindungsgemäße Fahrwerk-Hilfsrahmenanordnung;
**Fig.** 2 eine Seitenansicht einer erfindungsgemäßen Fahrwerk- Hilfsrahmenanordnung;
**Fig.** 3 eine erfindungsgemäße Fahrwerk- Hilfsrahmenanordnung in der Aufsicht;
**Fig.** 4 die beginnende Verformung des hinteren Befestigungsblechs und die weitere Verformung der Längsträger;
**Fig.** 5 die Abscherung der vorderen Befestigungspunkte des Fahrwerk- Hilfsrahmens am Längsträger und die weitere Verformung der Längsträger und des hinteren Befestigungsblechs, und
**Fig.** 6 die komplette Ablösung des Fahrwerk- Hilfsrahmens am hinteren Befestigungsblech nach dessen vollständigem Wegknicken, die weitere Verformung der Längsträger, und das Wegschieben des kompletten Fahrwerk- Hilfsrahmens unter die Fahrgastzelle.

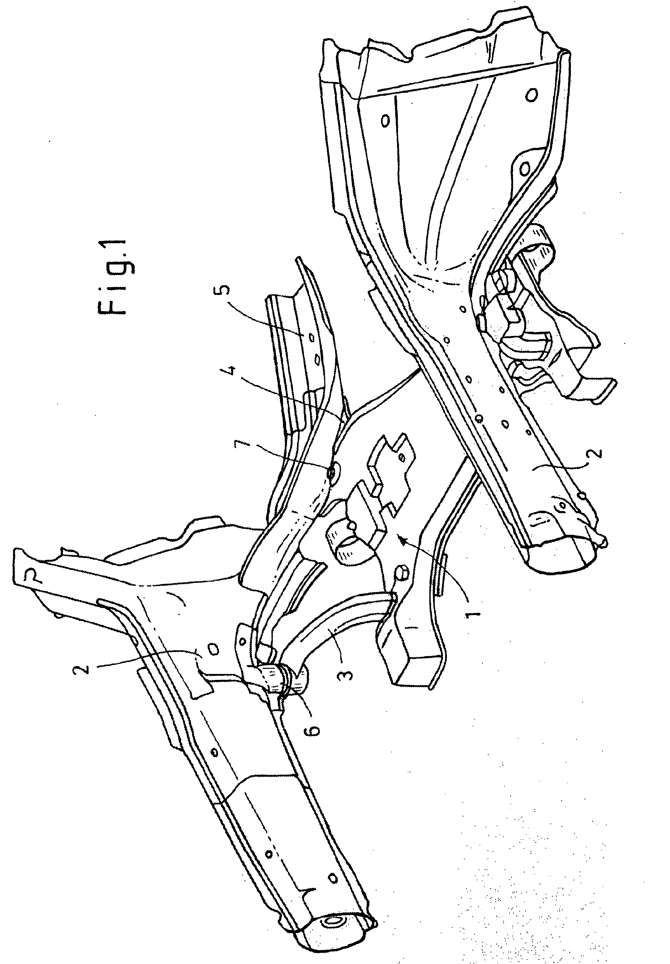

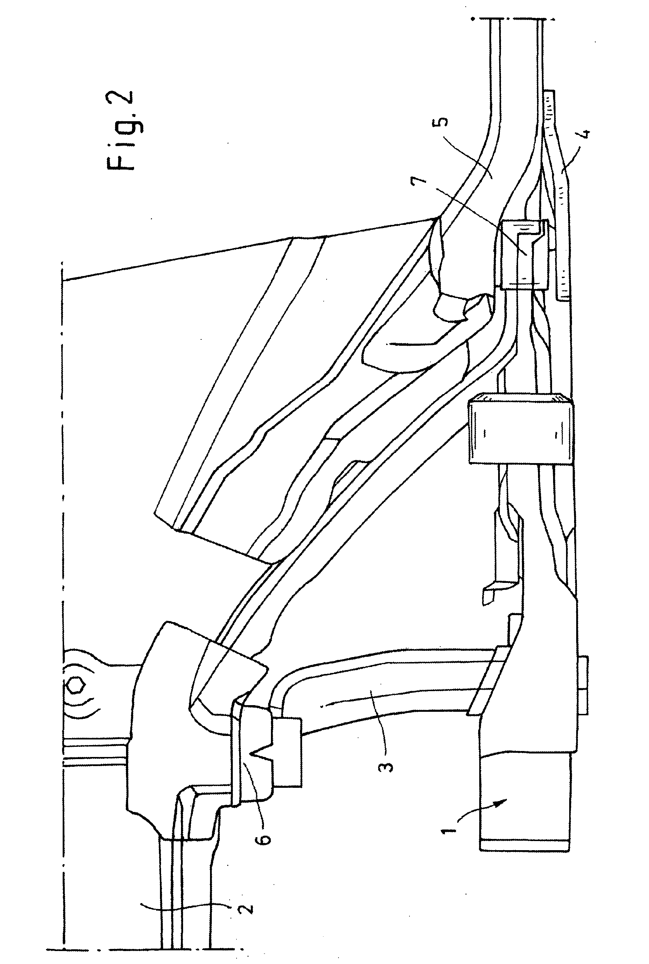

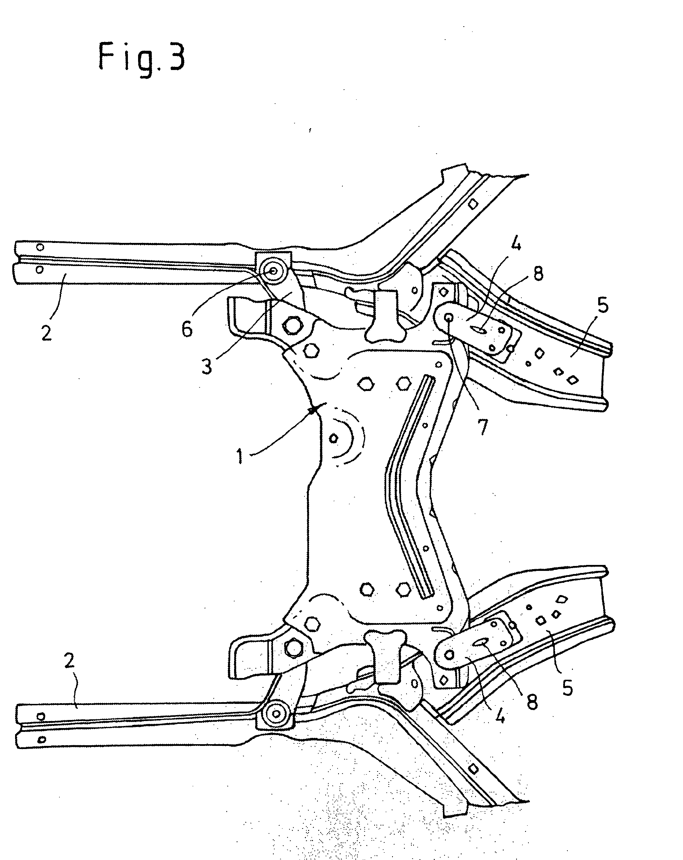

Die **Fig.** 1 bis 3 zeigen den Fahrwerk- Hilfsrahmen **1** im Frontbereich eines Fahrzeugs, der den Motorraum nach Unten abschließt und an dem seitlich die Vorderradaufhängung befestigt ist, die aus einem Vorderachsrahmen besteht und durch eine Feder-Dämpfer-Vorrichtung mit der Karosserie verbunden ist. Die Befestigung des Fahrwerk- Hilfsrahmens an der Karosserie erfolgt an vier Punkten, und zwar vorne mittels eines Trägerrohres **3** und einer Abscherschraubverbindung **6** mit dem Längsträger **2** und hinten über ein durch Bohrungen **8** gezielt geschwächtes Befestigungsblech **4** durch Schraubverbindung **7** mit der Karosserie- Unterboden - struktur der Fahrgastzelle **9.** Die Rampe **5** lenkt den Fahrwerk- Hilfsrahmen **1** bei einer weitgehenden Frontalaufprall-Deformation unter die Karosserie- Unterbodenstruktur der Fahrgastzelle **9.**

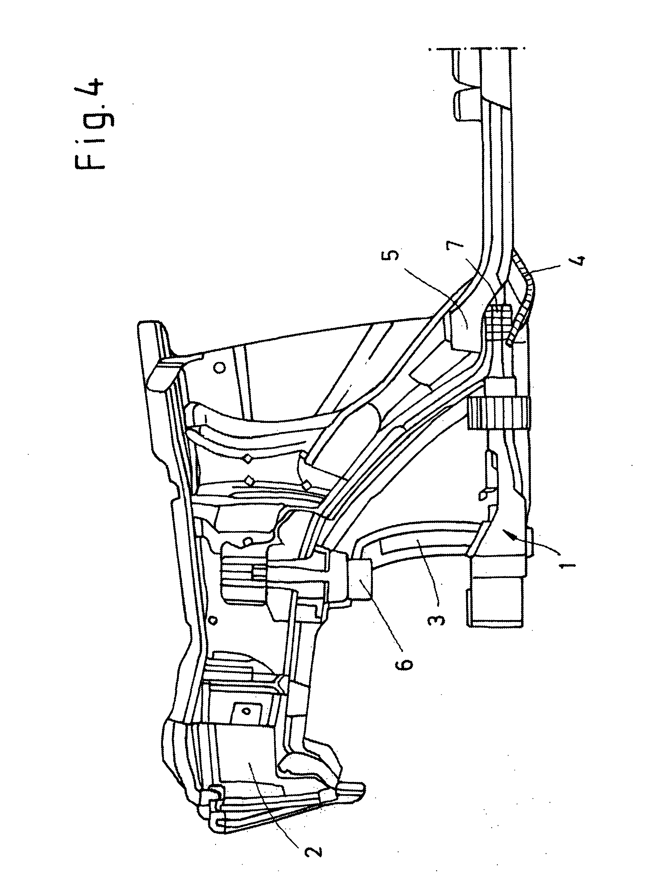

Im Falle eines Frontalaufpralls des Fahrzeugs können nun die unterschiedlichen Deformationsphasen unterschieden werden:
1. Zunächst verformen sich bei beginnendem Aufprall Stoßstange, Stoßstangenträger, sowie vordere Karosserieteile wie Kühlerträger, Radkasten und danach einsetzend die Deformationszonen der Längsträger **2**.
2. Da sich die Deformationszonen der Längsträger **2** weiter verformen, wird nun beginnend, wie in **Fig.** 4 dargestellt, der Fahrwerk- Hilfsrahmen **1** nach hinten verschoben, wodurch das hintere Befestigungsblech **4** anfängt, im Bereich der Schwächungsbohrung **8** einzuknicken.

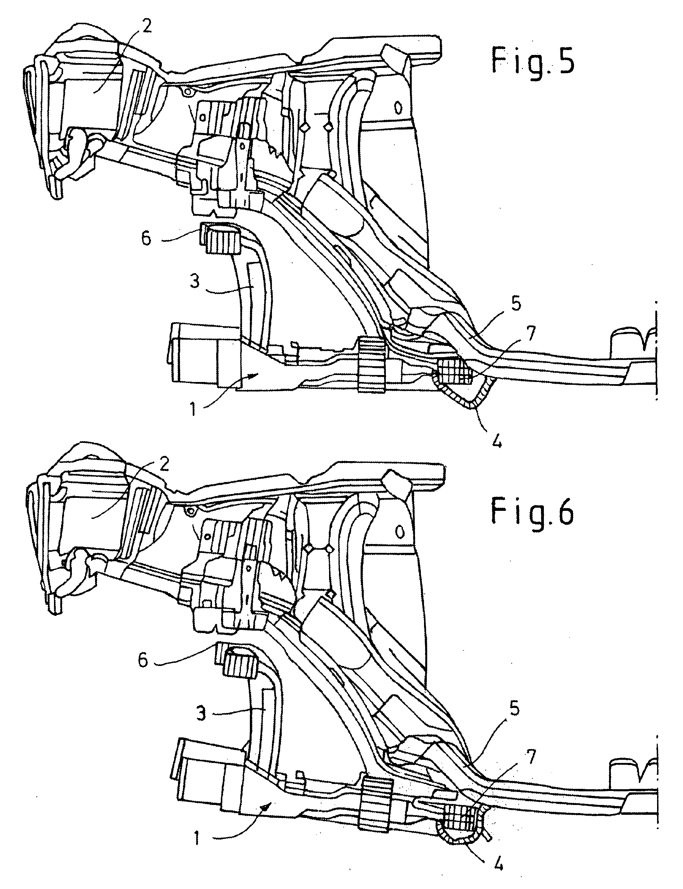

3. **Fig.** 5 zeigt, wie dies zu einer Relativbewegung zwischen Fahrwerk- Hilfsrahmen **1** und Längsträger **2** führt, was die Abscherung der vorderen Abscherschraubverbindungen **6** des Trägerrohres **3** am Längsträger **2** zur Folge hat. Die Deformationszonen der Längsträger **2** und die hinteren Befestigungsbleche **4** verformen sich hierbei weiter.
4. Wie aus **Fig.** 6 zu erkennen ist, kommt es nun im Folgenden zur kompletten Ablösung des Fahrwerk- Hilfsrahmens **1** am hinteren Befestigungsblech **4** nach dessen vollständigem Wegknicken. Die Deformationszonen der Längsträger **2** und die hinteren Befestigungsbleche 4 verformen sich hierbei weiter.
5. Wie aus **Fig.** 6 weiter zu erkennen ist, wird zum Schluss der komplette Fahrwerk-Hilfsrahmen **1** mittels einer Blechrampe **5** unter die Fahrgastzelle **9** geschoben.

Das in den **Fig.**1 bis 6 gezeigte Ausführungsbeispiel einer Fahrwerk- Hilfsrahmen - anordnung ist, wie man schnell sieht, analog für ein Fahrzeugheck zur Verbesserung der Crashsicherheit bei einem Heckaufprall anwendbar.

### Bezugszeichenliste

- **1**: Fahrwerk- Hilfsrahmen
- **2**: Längsträger der Fahrzeugkarosserie
- **3**: Trägerrohr zur vorderen Fahrwerk- Hilfsrahmenbefestigung am Längsträger
- **4**: Befestigungsblech zur hinteren Fahrwerk- Hilfsrahmenbefestigung an der Unterbodenstruktur
- **5**: Rampe zur Ablenkung des Fahrwerk- Hilfsrahmens von der Fahrgastzelle
- **6**: Abscherschraubverbindung zur vorderen Fahrwerk- Hilfsrahmenbefestigung
- **7**: Schraubverbindung zur hinteren Fahrwerk- Hilfsrahmenbefestigung
- **8**: Bohrung zur Schwächung des hinteren Befestigungsblechs
- **9**: Fahrgastzelle

## Patentansprüche

1. Fahrwerk- Hilfsrahmenanordnung an einer vorzugsweise selbsttragenden Fahrzeugkarosserie zur Verbesserung der Crashsicherheit, **umfassend**
a) wenigstens einen Fahrwerk- Hilfsrahmen (1),
b) mindestens zwei vordere Befestigungsmittel des Fahrwerk- Hilfsrahmen (1) an einem Längsträger (2), die ab einer bestimmten Relativkraft zwischen Längsträger (2) und Fahrwerk- Hilfsrahmen (1) abscheren,
c) mindestens zwei hintere Befestigungsmittel des Fahrwerk- Hilfsrahmen (1) an der Fahrzeugkarosserie, bestehend aus einem durch konstruktive Mittel gegenüber Längskraft definiert geschwächten Befestigungsblech (4), und
d) mindestens eine Rampenvorrichtung (5), mittels der der gesamte von der Fahrzeugkarosserie völlig enthoppelte Fahrwerk-Hilfsrahmen (1) bei einer starken Frontalaufprallverformung des Fahrzeugs unter die Fahrgastzelle (9) geschoben wird.

2. Fahrwerk- Hilfs rahmenanordnung nach Anspruch 1, **dadurch gekennzeichnet, dass** die vorderen Befestigungsmittel des Fahrwerk- Hilfsrahmen (1) am Längsträger (2) als Trägerrohr (3) ausgeführt sind.

3. Fahrwerk- Hilfsrahmenanordnung nach Anspruch 1 und 2, **dadurch gekennzeichnet, dass** das Trägerrohr (3) mit dem Längsträger (2) der Fahrzeugkarosserie mittels einer Abscherschraubverbindung (6) verbunden ist, die ab einer bestimmten Relativlängskraft zwischen Längsträger (2) und Fahrwerk- Hilfsrahmen (1) abschert.

4. Fahrwerk- Hilfs rahmenanordnung nach Anspruch 1, **dadurch gekennzeichnet, dass** die hinteren Befestigungsmittel des Fahrwerk- Hilfsrahmen (1) an der Fahrzeugkarosserie als Befestigungsblech (4) ausgeführt ist, das am Fahrwerk-Hilfsrahmen (1) und an der Karosserie im Bereich der Fahrgastzelle (9) kraftschlüssig verbunden ist.

5. Fahrwerk- Hilfs rahmenanordnung nach Anspruch 4, **dadurch gekennzeichnet, dass** die kraftschlüssige Verbindung des Befestigungsblechs (4) am FahrwerkHilfsrahmen (1) und an der Karosserie im Bereich der Fahrgastzelle (9) als Schraubverbindung ausgeführt ist.

6. Fahrwerk- Hilfsrahmenanordnung nach Anspruch 1 und 4, **dadurch gekennzeichnet, dass** die definierte Schwächung des Befestigungsblechs (4) als mindestens eine Bohrung (8) ausgeführt ist, so dass ab einer bestimmten Längskraftbelastung des Befestigungsblechs (4) dieses nach hinten wegknickt.

7. Fahrwerk- Hilfs rahmenanordnung nach Anspruch 1, **dadurch gekennzeichnet, dass** der vordere untere Abschnitt der Rampenvorrichtung (5) und der obere hintere Abschnitt des Fahrwerk- Hilfsrahmens (1) mittels einer Krümmung dergestalt ausgeführt sind, dass sie sich bei einer Relativbewegung zueinander nicht ineinander verhaken können, so dass der gesamte Fahrwerk- Hilfsrahmen (1) bei einer starken Frontalaufprallverformung des Fahrzeugs in jedem Fall unter die Fahrgastzelle (9) geschoben wird.

8. Fahrwerk- Hilfs rahmenanordnung nach Anspruch 1, **dadurch gekennzeichnet, dass** der Fahrwerk- Hilfsrahmen (1) als biege- und torsionssteifes Fahrwerkselement ausgeführt ist.

9. Fahrwerk- Hilfs rahmenanordnung nach Anspruch 8, **dadurch gekennzeichnet, dass** dem Fahrwerk- Hilfsrahmen (1) biege- und torsionssteife Vorderachsrahmen zugeordnet sind, die mittels einer Feder-Dämpfer-Vorrichtung mit der Fahrzeugkarosserie verbunden sind.

10. Fahrwerk- Hilfsrahmenanordnung nach einem der vorhergehenden Ansprüche, **dadurch gekennzeichnet, dass** der Geschehensablauf im Falle eines Frontalaufpralls des Fahrzeugs in fünf Deformationsphasen eingeteilt werden kann, so dass
a) sich zunächst bei beginnendem Aufprall Stoßstange, Stoßstangenträger, sowie vordere Karosserieteile wie Kühlerträger, Radkasten verformen und danach einsetzend die Deformationszonen der Fahrzeugkarosserie,
b) nun beginnend der Fahrwerk- Hilfsrahmen (1) nach hinten verschoben wird, da sich die Deformationszonen der Karosserie weiter verformen, wodurch das hintere Befestigungsblech (4) anfängt, im Bereich der Schwächungsbohrung (8) einzuknicken,
c) dies zu einer Relativbewegung zwischen Fahrwerk- Hilfsrahmen (1) und Längsträger (2) führt, was die Abscherung der vorderen Abscherschraubverbindungen (6) des Trägerrohres (3) am Längsträger (2) zur Folge hat,
d) es nun im Folgenden zur kompletten Ablösung des Fahrwerk- Hilfsrahmens (1) am hinteren Befestigungsblech (4) nach dessen vollständigem Wegknicken kommt, und
e) zum Schluss der komplette Fahrwerk- Hilfsrahmens (1) mittels einer Blechrampe (5) unter die Fahrgastzelle (9) geschoben wird, während sich die Deformationszonen der Fahrzeugkarosserie ungestört durch den Fahrwerk-Hilfsrahmen (1) weiter verformen können.

## Claims

1. Chassis auxiliary-frame arrangement on a preferably self-supporting vehicle body for improving the safety in a crash, comprising
a) at least one chassis auxiliary frame (1),
b) at least two front means for fastening the chassis auxiliary frame (1) to a longitudinal member (2), said fastening means shearing off after a certain relative force between the longitudinal member (2) and chassis auxiliary frame (1),
c) at least two rear means for fastening the chassis auxiliary frame (1) to the vehicle body, comprising a fastening plate (4) weakened in a defined manner with respect to longitudinal force by structural means, and
d) at least one ramp device (5) by means of which the entire chassis auxiliary frame (1), which is completely decoupled from the vehicle body, is pushed under the passenger cell (9) if the vehicle is severely deformed in a frontal impact.

2. Chassis auxiliary-frame arrangement according to Claim 1, **characterized in that** the front means for fastening the chassis auxiliary frame (1) to the longitudinal member (2) are designed as a support pipe (3).

3. Chassis auxiliary-frame arrangement according to Claims 1 and 2, **characterized in that** the support pipe (3) is connected to the longitudinal member (2) of the vehicle body by means of a shearing-screw connection (6) which shears off after a certain relative longitudinal force between the longitudinal member (2) and chassis auxiliary frame (1).

4. Chassis auxiliary-frame arrangement according to Claim 1, **characterized in that** the rear means for fastening the chassis auxiliary frame (1) to the vehicle body is designed as a fastening plate (4) which is frictionally connected to the chassis auxiliary frame (1) and to the body in the region of the passenger cell (9).

5. Chassis auxiliary-frame arrangement according to Claim 4, **characterized in that** the frictional connection of the fastening plate (4) on the chassis auxiliary frame (1) and on the body in the region of the passenger cell (9) is designed as a screw connection.

6. Chassis auxiliary-frame arrangement according to Claims 1 and 4, **characterized in that** the defined weakening of the fastening plate (4) is designed as at least one hole (8), with the result that, after the fastening plate (4) is subjected to a longitudinal force, it buckles away rearwards.

7. Chassis auxiliary-frame arrangement according to Claim 1, **characterized in that** the front, lower section of the ramp device (5) and the upper, rear section of the chassis auxiliary frame (1) are formed by means of a curvature in such a manner that they cannot become hooked in each other during a movement relative to each other, and so the entire chassis auxiliary frame (1) is always pushed under the passenger cell (9) if the vehicle is severely deformed in a frontal impact.

8. Chassis auxiliary-frame arrangement according to Claim 1, **characterized in that** the chassis auxiliary frame (1) is designed as a flexurally rigid and torsion-proof chassis element.

9. Chassis auxiliary-frame arrangement according to Claim 8, **characterized in that** the chassis auxiliary frame (1) is assigned flexurally rigid and torsion-proof front axle frames which are connected to the vehicle body by means of a spring and shock absorber device.

10. Chassis auxiliary-frame arrangement according to one of the preceding claims, **characterized in that** the sequence of events in the event of a frontal impact of the vehicle can be divided into five deformation phases, so that
a) firstly, at the start of the impact, the bumper, bumper support and front body parts, such as the radiator support and wheel houses, are deformed followed by the deformation zones of the vehicle body beginning to deform,
b) then the chassis auxiliary-frame (1) begins to be displaced rearwards, since the deformation zones of the body continue to deform, as a result of which the rear fastening plate (4) starts to buckle in the region of the weakening hole (8),
c) this leads to a relative movement between the chassis auxiliary-frame (1) and longitudinal member (2) resulting in the front shearing-screw connections (6) of the support pipe (3) on the longitudinal member (2) shearing off,
d) this is followed by the chassis auxiliary frame (1) becoming completely detached at the rear fastening plate (4) after the latter has completely buckled away, and
e) finally the complete chassis auxiliary frame (1) is pushed under the passenger cell (9) by means of a sheet-metal ramp (5) while the deformation zones of the vehicle body can continue to be deformed without interference from the chassis auxiliary-frame (1).

## Revendications

1. Agencement de cadre auxiliaire de châssis sur une carrosserie de véhicule de préférence autoportante pour l'amélioration de la sécurité en cas d'accident, comprenant
a) au moins un cadre auxiliaire de châssis (1),
b) au moins deux moyens de fixation avant du cadre auxiliaire de châssis (1) sur un support longitudinal (2), qui se cisaillent à partir d'une force déterminée relative entre le support longitudinal (2) et le cadre auxiliaire de châssis (1),
c) au moins deux moyens de fixation arrière du cadre auxiliaire de châssis (1) sur la carrosserie du véhicule, se composant d'une tôle de fixation (4) affaiblie par des moyens constructifs de manière définie vis-à-vis de la force longitudinale, et
d) au moins un dispositif de rampe (5), au moyen duquel l'ensemble du cadre auxiliaire (1) complètement désaccouplé de la carrosserie du véhicule est poussé sous l'habitacle de conduite (9) en cas de forte déformation du véhicule sous l'effet d'une collision frontale.

2. Agencement de cadre auxiliaire de châssis selon la revendication 1, **caractérisé en ce que** les moyens de fixation avant du cadre auxiliaire de châssis (1) sont réalisés sur le support longitudinal (2) sous forme de tube de support (3).

3. Agencement de cadre auxiliaire de châssis selon la revendication 1 et 2, **caractérisé en ce que** le tube de support (3) est connecté au support longitudinal (2) de la carrosserie du véhicule au moyen d'une connexion vissée à cisaillement (6), qui se cisaille à partir d'une force déterminée relative entre le support longitudinal (2) et le cadre auxiliaire de châssis (1).

4. Agencement de cadre auxiliaire de châssis selon la revendication 1, **caractérisé en ce que** les moyens de fixation arrière du cadre auxiliaire de châssis (1) sont réalisés sur la carrosserie du véhicule en tant que tôle de fixation (4), qui est connectée par force sur le cadre auxiliaire de châssis (1) et sur la carrosserie dans la région de l'habitacle de conduite (9).

5. Agencement de cadre auxiliaire de châssis selon la revendication 4, **caractérisé en ce que** la connexion par force de la tôle de fixation (4) sur le cadre auxiliaire de châssis (1) et sur la carrosserie est réalisée dans la région de l'habitacle de conduite (9) sous forme de connexion vissée.

6. Agencement de cadre auxiliaire de châssis selon la revendication 1 et 4, **caractérisé en ce que** l'affaiblissement défini de la tôle de fixation (4) est réalisé sous forme d'au moins un alésage (8) de sorte qu'à partir d'une certaine contrainte de force longitudinale sur la tôle de fixation (4), celle-ci fléchisse en s'écartant vers l'arrière.

7. Agencement de cadre auxiliaire de châssis selon la revendication 1, **caractérisé en ce que** la portion avant inférieure du dispositif de rampe (5) et la portion arrière supérieure du cadre auxiliaire de châssis (1) sont réalisées au moyen d'une courbure de telle sorte qu'elles ne puissent pas s'accrocher l'une dans l'autre en cas de mouvement relatif de l'une par rapport à l'autre, de sorte que l'ensemble du cadre auxiliaire de châssis (1) soit poussé dans tous les cas sous l'habitacle de conduite (9) en cas de forte déformation du véhicule due à une collision frontale.

8. Agencement de cadre auxiliaire de châssis selon la revendication 1, **caractérisé en ce que** le cadre auxiliaire de châssis (1) est réalisé sous forme d'élément de châssis rigide en flexion et en torsion.

9. Agencement de cadre auxiliaire de châssis selon la revendication 8, **caractérisé en ce que** l'on associe au cadre auxiliaire de châssis (1) des cadres d'essieu avant rigides en flexion et en torsion, qui sont connectés au moyen d'un dispositif d'amortissement à ressort à la carrosserie du véhicule.

10. Agencement de cadre auxiliaire de châssis selon l'une quelconque des revendications précédentes, **caractérisé en ce que** le déroulement des opérations en cas de collision frontale du véhicule peut être divisé en cinq phases de déformation, de sorte que
a) d'abord, au début de la collision, la tige-poussoir, le support de tige-poussoir ainsi que les pièces avant de la carrosserie telles que le support de radiateur, le carter de roue, se déforment, et ensuite les zones de déformation de la carrosserie du véhicule commencent à se déformer,
b) ensuite, le cadre auxiliaire de châssis (1) commence à être déplacé vers l'arrière car les zones de déformation de la carrosserie continuent de se déformer, ce qui fait que la tôle de fixation arrière (4) commence à fléchir dans la région de l'alésage d'affaiblissement (8),
c) ceci conduit à un mouvement relatif entre le cadre auxiliaire de châssis (1) et le support longitudinal (2), ce qui provoque le cisaillement des connexions vissées avant à cisaillement (6) du tube de support (3) sur le support longitudinal (2),
d) il se produit alors un détachement complet du cadre auxiliaire de châssis (1) sur la tôle de fixation arrière (4) après son écartement complet par fléchissement, et
e) pour finir, le cadre auxiliaire de châssis (1) complet est poussé au moyen d'une rampe en tôle (5) sous l'habitacle de conduite (9), tandis que les zones de déformation de la carrosserie du véhicule peuvent continuer de se déformer sans être gênées par le cadre auxiliaire de châssis (1).
